# EUROPEAN PATENT APPLICATION

(11) **EP 4 726 347 A1**
(43) Date of publication of application: **15.04.2026**
(21) Application number: 24817822.0
(22) Date of filing: 30.05.2024
(51) Int. Cl.: G01L 3/14

(54) **STRAIN WAVE GEAR PROVIDED WITH TORQUE DETECTION DEVICE**

(30) Priority: 07.06.2023 WO PCT/JP2023/021261
(71) Applicant: Harmonic Drive Systems Inc., Shinagawa-ku Tokyo 140-0013 (JP)
(72) Inventor: HORIUCHI Masashi, Azumino-shi, Nagano 399-8305 (JP); KATO Yuki, Azumino-shi, Nagano 399-8305 (JP)
(74) Representative: TBK
(86) International application number: PCT/JP2024/019899
(87) International publication number: WO 2024/253017

(57) **Abstract**

A strain-gauge-type torque detection part (20) of a strain wave gearing (1) comprises a first torque detection part (20A) and a second torque detection part (20B), which output detection signals of two independent systems. The first and second torque detection parts (20A, 20B) are provided with multiple sets of strain gauges (11) attached to a diaphragm (3c) of an externally toothed gear (3), at predetermined angular intervals around a central axis. A first detection signal (22A) from the first torque detection part (20A) and a second detection signal (22B) from the second torque detection part (20B) are combined after a gain adjustment and a combined signal (23C) is generated. Transmitted torque can be calculated on the basis of the first detection signal (23A), the second detection signal (23B), and the combined signal (23C). Three-system output, resulting from adding high-accuracy output (24C) to detection outputs (24A, 24B) of two independent systems, is obtained from a torque detection device (10).

## Description

### TECHNICAL FIELD

The present invention relates to a strain wave gearing with a strain-gauge-type torque detection device that detects transmitted torque transmitted via a flexible externally toothed gear.

### BACKGROUND ART

Strain wave gearings with strain-gauge-type torque detection devices have been proposed in Patent Documents 1 to 3. To accurately detect torque in a strain wave gearing, it is necessary to remove rotation ripple, which is a periodic error component included in a strain gauge output signal that is generated regardless of the transmitted torque, and linearity of detection output must be improved. Therefore, multiple sets of strain gauges are used in order to compensate for elliptical distortion, which is a periodic error component included in the detection output due to rotation of a wave generator.

In Patent Document 1, two torque detection means individually comprising a pair of strain gauges disposed at 90° intervals on a surface of an externally toothed gear are disposed at positions that are rotated by an angle of k×45° (k being an odd number) around a central axis of the externally toothed gear, and transmitted torque is calculated on the basis of a combined output of the detection output of each of the two torque detection means. Patent Document 2 proposes a method of adjusting gain of outputs of a plurality of detection elements in order to remove periodic error included in a detection output obtained by combining the outputs of the detection elements. Patent Document 3 proposes a method in which at least (2N+1) strain gauges are attached to an externally toothed gear, N (a positive integer) being an order of a rotation ripple component to be compensated, and after gain adjustment by an amplifier, outputs of the strain gauges are combined to generate a detection signal.

### PRIOR ART LITERATURE

### [Patent Documents]

[Patent Document 1] JP 3644558 B2
[Patent Document 2] JP 4569990 B2
[Patent Document 3] JP 2004-45378 A

### DISCLOSURE OF THE INVENTION

### PROBLEMS TO BE SOLVED BY THE INVENTION

In cases such as when a torque sensor is mounted on a collaborative robot or the like as a safety measure, it is desirable to have a duplicate or two-system sensor so that safety can be guaranteed even if a sensor fails.

An object of the present invention is to provide a strain wave gearing with a torque detection device, in which a strain-gauge-type torque detection device is duplicated by devising an arrangement of multiple sets of strain gauges, making it possible to obtain three-system output including a high-accuracy output in addition to detection outputs of two independent systems.

### MEANS USED TO SOLVE THE ABOVE-MENTIONED PROBLEMS

To solve the problems described above, according to the present invention, there is provided a strain wave gearing with a torque detection device that detects transmitted torque transmitted via a flexible externally toothed gear, the strain wave gearing being characterized in that
the torque detection device includes:
a first torque detection part and a second torque detection part that output detection signals of two independent systems;
an output-combining part that combines a first detection signal, which is the detection signal of the first torque detection part, and a second detection signal, which is the detection signal of the second torque detection part, and generates a combined signal; and
a computation part that is capable of calculating the transmitted torque on the basis of the first detection signal, the second detection signal, and the combined signal,
the first torque detection part being a strain-gauge-type torque detection part provided with a first group of strain gauges attached at predetermined angular intervals to a surface of the externally toothed gear around a central axis of the externally toothed gear; and
the second torque detection part being a strain-gauge-type torque detection part provided with a second group of strain gauges attached at predetermined angular intervals to the surface of the externally toothed gear around the central axis of the externally toothed gear.

The externally toothed gear of the strain wave gearing is caused to flex into an ellipsoidal shape by the wave generator, and the externally toothed gear meshes with the rigid internally toothed gear in portions where a major axis of the ellipsoidal shape is located. The detection signals of the strain gauges include, as the periodic error component, an ellipsoidal strain component having a period of 180° and an error component having a period that is an integer multiple of 180°. In this case, for example, a plurality of strain gauges disposed at 45° angular intervals or 60° angular intervals around the central axis of the externally toothed gear are divided into two groups, and independent detection signals are obtained from the groups of strain gauges. The detection signals of two independent systems obtained from the two groups of strain gauges are combined to remove rotation ripple, and high-accuracy output having improved linearity is obtained.

### EFFECT OF THE INVENTION

According to the present invention, multiple sets of strain gauges, which are disposed around a central axis of an externally toothed gear, are divided into two groups in order to remove a periodic error component, and detection signals of two independent systems are obtained. The detection signals of two systems are combined to obtain a high-accuracy output from which the periodic error component is removed, so that three-system output including the high-accuracy output is obtained. A torque detection device is thereby obtained with which it is possible to detect transmitted torque with high accuracy, and safety can be guaranteed even if either one of detection parts fails.

### BRIEF DESCRIPTION OF THE DRAWINGS

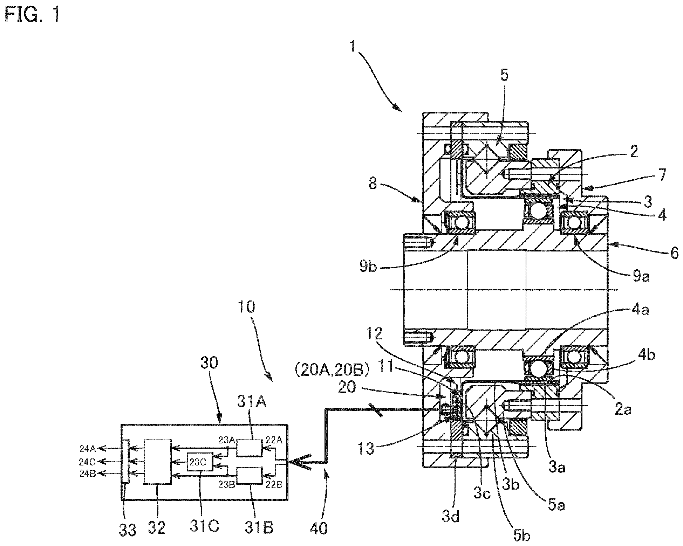

FIG. 1 is an explanatory drawing of a strain wave gearing with a torque detection device to which the present invention is applied;

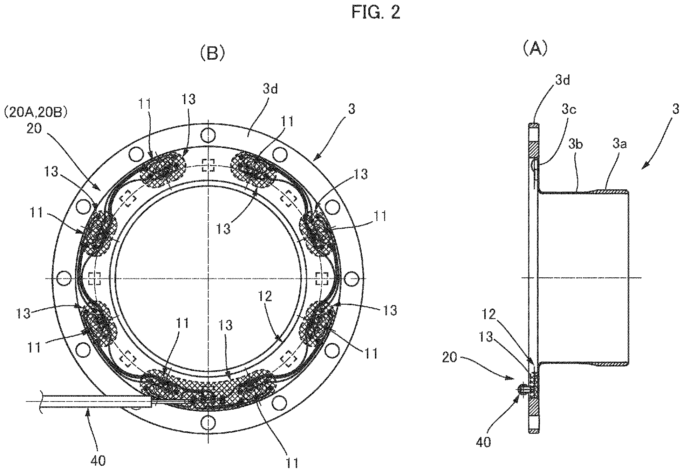

FIG. 2(A) is a schematic longitudinal cross-sectional view of an externally toothed gear, and FIG. 2(B) is a schematic end surface view of the externally toothed gear;

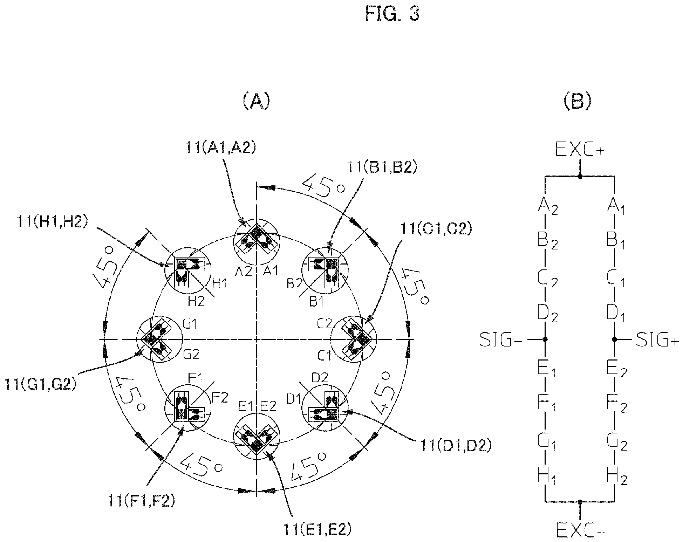

FIG. 3(A) is an explanatory drawing of eight sets of strain gauges constituting a torque detection part, and FIG. 3(B) is an explanatory drawing of a Wheatstone bridge circuit constituted of the eight sets of strain gauges;

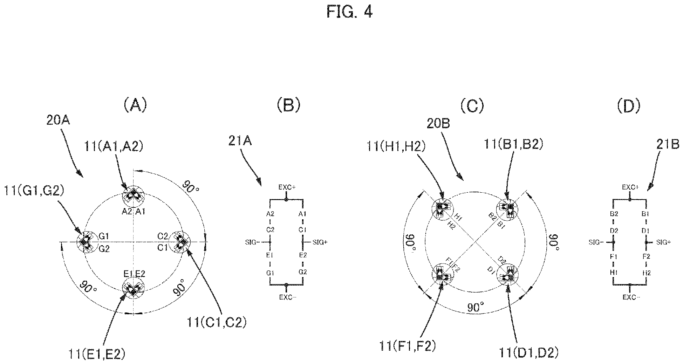

FIG. 4(A) is an explanatory drawing of four sets of strain gauges constituting a first torque detection part, FIG. 4(B) is an explanatory drawing of a first Wheatstone bridge circuit, FIG. 4(C) is an explanatory drawing of four sets of strain gauges constituting a second torque detection part, and FIG. 4(D) is an explanatory drawing of a second Wheatstone bridge circuit;

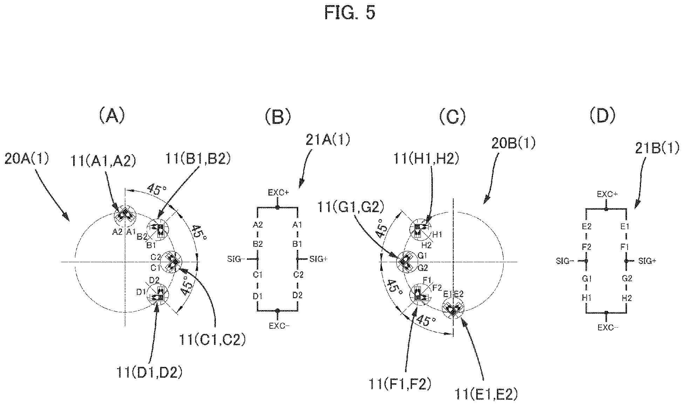

FIG. 5(A) is an explanatory drawing of four sets of strain gauges constituting a first torque detection part, FIG. 5(B) is an explanatory drawing of a first Wheatstone bridge circuit, FIG. 5(C) is an explanatory drawing of four sets of strain gauges constituting a second torque detection part, and FIG. 5(D) is an explanatory drawing of a second Wheatstone bridge circuit;

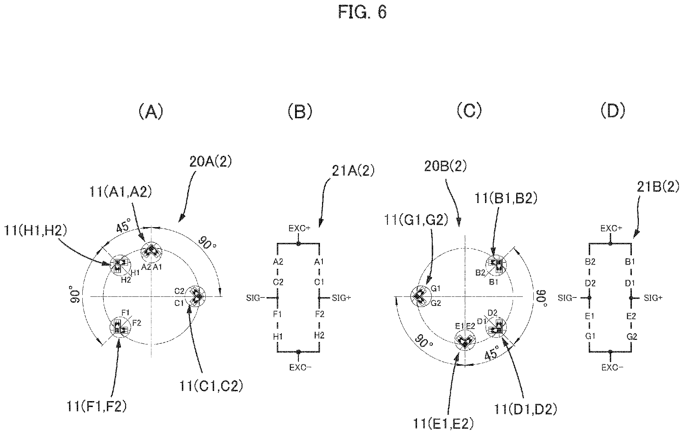

FIG. 6(A) is an explanatory drawing of four sets of strain gauges constituting a first torque detection part, FIG. 6(B) is an explanatory drawing of a first Wheatstone bridge circuit, FIG. 6(C) is an explanatory drawing of four sets of strain gauges constituting a second torque detection part, and FIG. 6(D) is an explanatory drawing of a second Wheatstone bridge circuit;

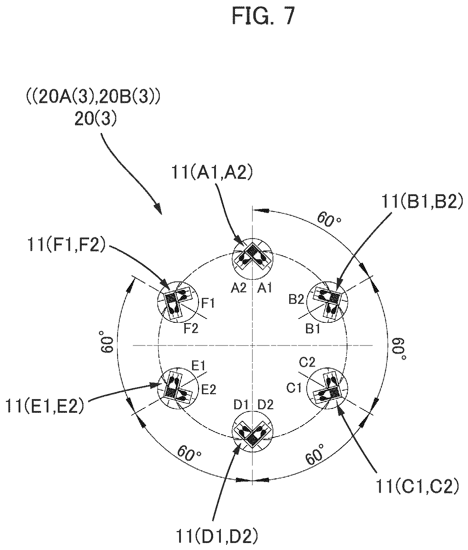

FIG. 7 is an explanatory drawing of six sets of strain gauges constituting a torque detection part;

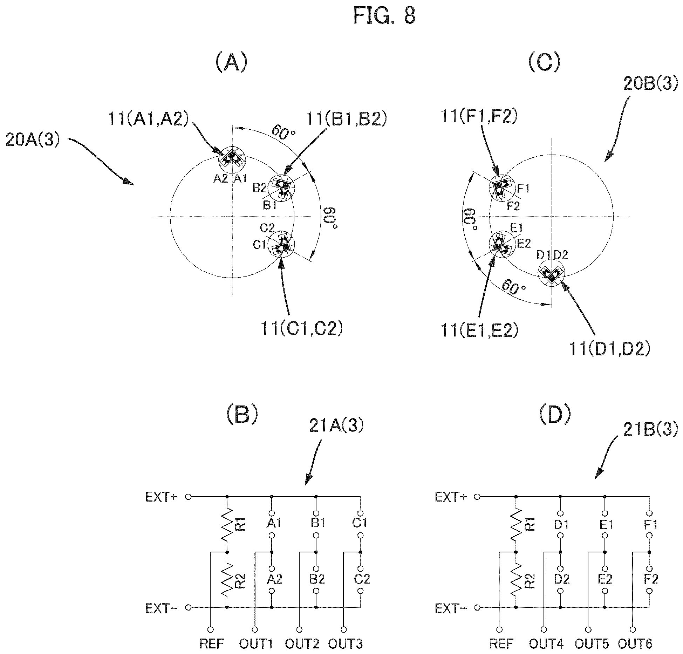

FIG. 8(A) is an explanatory drawing of three sets of strain gauges constituting a first torque detection part, FIG.8(B) is an explanatory drawing of a first bridge circuit, FIG. 8(C) is an explanatory drawing of three sets of strain gauges constituting a second torque detection part, and FIG. 8(D) is an explanatory drawing of a second bridge circuit;

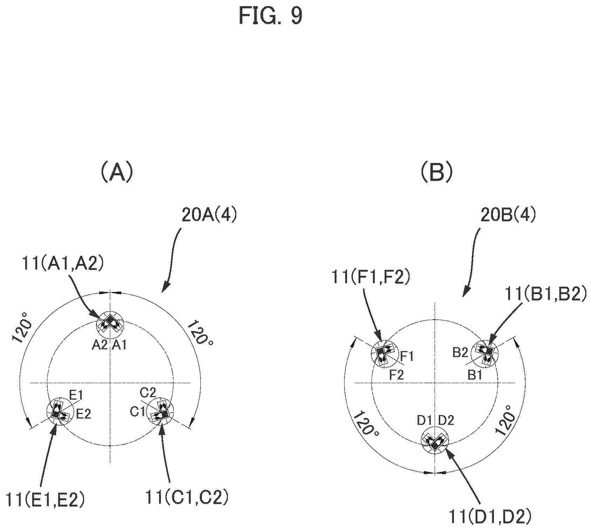

FIG. 9(A) is an explanatory drawing of three sets of strain gauges constituting a first torque detection part, and FIG. 9(B) is an explanatory drawing of three sets of strain gauges constituting a second torque detection part;

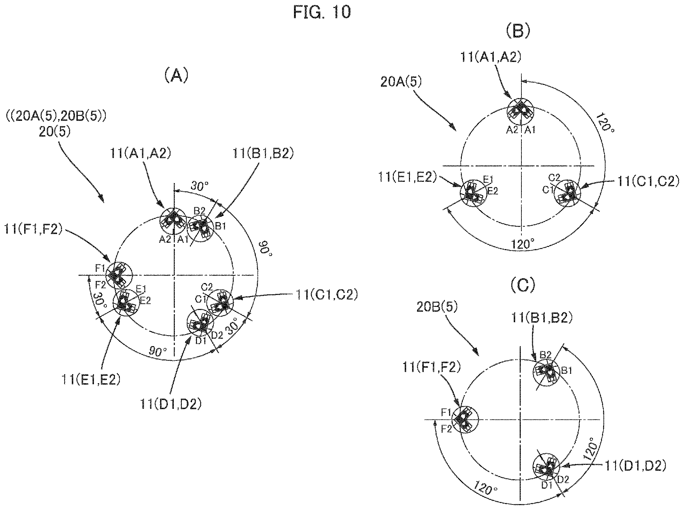

FIG.10(A) is an explanatory drawing of six sets of strain gauges constituting a torque detection part, FIG. 10(B) is an explanatory drawing of three sets of strain gauges constituting a first torque detection part, and FIG. 10(C) is an explanatory drawing of three sets of strain gauges constituting a second torque detection part; and

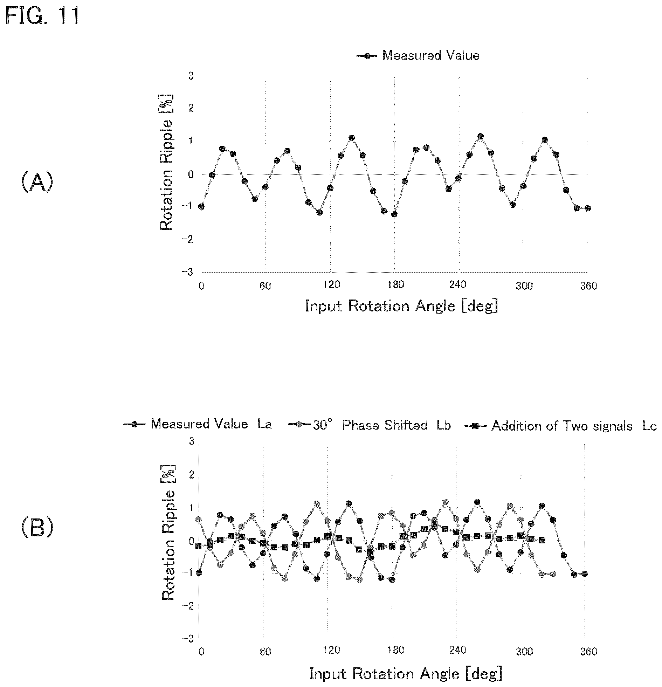

FIG. 11(A) is a graph showing measurement results of rotational ripple (%) included in a torque detection output with respect to the input rotational angle obtained from the first torque detection part shown in FIG. 10(B), and FIG. 11(B) is a graph showing simulation results of rotational ripple included in the torque detection output (combined signal) obtained from the torque detection part constituted as shown in FIG. 10.

### MODE FOR CARRYING OUT THE INVENTION

### (Overall configuration)

FIG. 1 is a schematic longitudinal cross-sectional view of a strain wave gearing to which the present invention is applied. FIG. 2(A) is a longitudinal cross-sectional view of an externally toothed gear, and FIG. 2(B) is an end surface view of the externally toothed gear with a torque detection part attached.

A strain wave gearing 1 is provided with a rigid internally toothed gear 2, a flexible externally toothed gear 3 coaxially disposed on an inner side of the internally toothed gear, an elliptically contoured wave generator 4 coaxially fitted to an inner side of the externally toothed gear, a cross roller bearing 5 that supports the internally toothed gear 2 and the externally toothed gear 3 so as to enable relative rotation therebetween, a hollow input shaft 6, an end plate 7 disposed on one axial-direction side, and an end plate 8 disposed on the other axial-direction side. Shaft end parts at both sides of the hollow input shaft 6 are, respectively, supported by the end plates 7, 8 via ball bearings 9a, 9b.

The externally toothed gear 3 has a top hat shape, and is provided with a cylindrical barrel part 3b on which external teeth 3a are formed, a diaphragm 3c that continues from one end of the barrel part and extends outward in a radial direction, and an annular boss 3d formed on an outer peripheral edge of the diaphragm. The cylindrical barrel part 3b is caused to flex into an ellipsoidal shape by the wave generator 4, and the external teeth 3a partially mesh with internal teeth 2a of the internally toothed gear 2. The wave generator 4 is provided with a fixed-width cam plate 4a integrally formed on the hollow input shaft 6, and a wave bearing 4b fitted to an ellipsoidal outer peripheral surface of the cam plate 4a.

When the wave generator 4 rotates along with rotation of the hollow input shaft 6, meshing positions of the gears 2, 3 move in a circumferential direction, and relative rotation corresponding to a difference in the number of teeth between the two gears occurs therebetween. The internally toothed gear 2 is sandwiched between the end plate 7 and an inner ring 5a of the cross roller bearing 5, in which state these three members are coaxially fastened together. The boss 3d of the externally toothed gear 3 is sandwiched between the other end plate 8 and an outer ring 5b of the cross roller bearing 5, in which state these three members are coaxially fastened together. For example, when the internally toothed gear 2 is fixed so as to not rotate, the externally toothed gear 3 rotates and reduced rotation is outputted to a load-side member (not shown) via the end plate 8 that functions as an output shaft.

### (Torque detection device)

The strain wave gearing 1 is equipped with a torque detection device 10 that detects transmitted torque transmitted via the externally toothed gear 3. The torque detection device 10 is provided with a torque detection part 20 attached to the externally toothed gear 3, a signal-processing unit 30 disposed outside the strain wave gearing 1, and a cable wire 40 that connects the torque detection part 20 and the signal-processing unit 30 together. The torque detection part 20 is provided with multiple sets of strain gauges 11 and a flexible printed wiring board 12 attached to the diaphragm 3c of the externally toothed gear 3. In the present example, eight sets of strain gauges arranged at equal angular intervals of 45° are provided around a central axis of the externally toothed gear 3, as shown in FIG. 2(B). The strain gauges 11 are protected by a coating layer 13 as shown by the shaded areas in FIG. 2(A). The strain gauges are also connected to each other by a wiring pattern (not shown) formed on the flexible printed wiring board 12.

FIG. 3(A) is an explanatory drawing of an arrangement of eight sets of strain gauges 11 attached to the diaphragm 3c of the externally toothed gear 3. The strain gauges 11 are of an orthogonal two-axis type and are arranged at equal angular intervals of 45° around the central axis of the externally toothed gear 3. The strain gauges 11 are described below as, clockwise, strain gauges 11(A1, A2), 11(B1, B2), 11(C1, C2), 11(D1, D2), 11(E1, E2), 11(F1, F2), 11(G1, G2), and 11(H1, H2).

### (Torque detection part)

The torque detection part 20 of the present example, as shown in FIG. 4, is divided into a first torque detection part 20A and a second torque detection part 20B, which output detection signals of two independent systems.

As shown in FIG. 4(A), the first torque detection part 20A of the torque detection part 20 is provided with four sets of strain gauges 11(A1, A2), 11(C1, C2), 11(E1, E2), and 11(G1, G2) arranged at 90° intervals, and as shown in FIG. 4(B), a first Wheatstone bridge circuit 21A is formed of these four sets of strain gauges. Similarly, the second torque detection part 20B, as shown in FIG. 4(C), is provided with the remaining four sets of strain gauges 11(B1, B2), 11(D1, D2), 11(F1, F2), and 11(H1, H2) arranged at 90° intervals, and a second Wheatstone bridge circuit 21B is formed of these strain gauges as shown in FIG. 4(D). A first detection signal 22A, which is an output signal from the first Wheatstone bridge circuit 21A constituting the first torque detection part 20A, and a second detection signal 22B, which is an output signal from the second Wheatstone bridge circuit 21B constituting the second torque detection part 20B, are supplied to the signal-processing unit 30 via the cable wire 40.

The signal-processing unit 30, as shown in FIG. 1, is provided with a first amplification part 31A that adjusts the gain of the first detection signal 22A, a second amplification part 31B that adjusts the gain of the second detection signal 22B independently of the first amplification part 31A, and an output-combining part 31C that combines a first detection signal 23A and a second detection signal 23B after the gain adjustment to generate a combined signal 23C. The signal-processing unit 30 is also provided with: a computation part 32 that calculates transmitted torque on the basis of the first detection signal 23A after the gain adjustment, the second detection signal 23B after the gain adjustment, and the combined signal 23C; and an output port 33. A first detected torque signal 24A, a second detected torque signal 24B, and a combined torque signal 24C (a high-accuracy detection signal), which represent the transmitted torque calculated on the basis of the first detection signal 23A, the second detection signal 23B, and the combined signal 23C, respectively, are outputted from the output port 33 to a superordinate controller or the like (not shown). The first detection signal 23A, the second detection signal 23B, and the combined signal 23C are outputted from the output port 33. There may be a case in which a transmitted torque value is computed on the superordinate side and a case in which the combined signal 23C is generated on the superordinate side.

The combined signal 23C, which is obtained by adding the first detection signal 23A and the second detection signal 23B of two independent systems, is equivalent to the output of the Wheatstone bridge circuits constituted of the eight sets of strain gauges shown in FIG. 3(B), and is high-accuracy detection output from which rotation ripple has been removed and of which linearity has been improved.

Thus, in the torque detection device 10 of the present example, a torque detection mechanism in which detection signals of two independent systems are obtained is constructed using eight sets of strain gauges 11, which are arranged around the central axis of the externally toothed gear 3 in order to remove a periodic error component. Even if one of the sensor systems fails, the other can continue to detect the transmitted torque, and safety is therefore ensured. Moreover, torque can be accurately detected using detection output from which the periodic error component has been removed by combining the detection signals of two systems.

A high-accuracy signal (combined signal 23C) can also be obtained by adding the outputs (first detection signal 23A and second detection signal 23B) of two systems on the user side. If the output signals (23A, 23B) are digitally converted and serially outputted in an amplifier of the signal-processing unit 30, it is also possible to combine a high-accuracy signal (combined signal 23C) with the signals (23A, 23B) of two systems and output the result. For example, in the case of 12-bit low-accuracy signals of two systems and a 12-bit high-accuracy signal, these signals can be transmitted as the superordinate (first and second detection signals 23A, 23B) and subordinate (combined signal 23C) components of a 24-bit serial signal.

FIGS. 5 and 6 show other examples of using two systems for the torque detection part 20 in cases in which strain gauges are located at eight places arranged at 45°. In the example in FIG. 5, the torque detection part is divided into a first torque detection part 20A(1) provided with a first Wheatstone bridge circuit 21A(1) constituted of four sets of strain gauges 11(A1, A2) to 11(D1, D2), as shown in FIGS. 5(A) and (B), and a second torque detection part 20B(1) provided with a second Wheatstone bridge circuit 21B(1) constituted of the remaining four sets of strain gauges 11(E1, E2) to 11(H1, H2), as shown in FIGS. 5(C) and (D).

In the example of FIG. 6, the torque detection part is divided into a first torque detection part 20A(2) provided with a first Wheatstone bridge circuit 21A(2) constituted of four sets of strain gauges 11(A1, A2), 11(C1, C2), 11(F1, F2), 11(H1, H2), as shown in FIGS. 6(A) and (B), and a second torque detection part 20B(2) provided with a second Wheatstone bridge circuit 21B(2) constituted of the remaining four sets of strain gauges 11(B1, B2), 11(D1, D2), 11(E1, E2), 11(G1, G2), as shown in FIGS. 6(C) and (D).

### (Another examples of torque detection part)

FIG. 7 shows another example of the torque detection part 20. The torque detection part 20(3) shown is configured such that the diaphragm of the externally toothed gear is provided with six sets of strain gauges 11(A1, A2) to 11(F1, F2) attached at equal angular intervals of 60° around the central axis (strain gauges are located in six places arranged at 60°).

FIGS. 8 and 9 show examples of dividing the torque detection part 20(3) of this case into two independent systems (first torque detection part 20A and second torque detection part 20B).

The torque detection part 20 shown in FIG. 8 is divided into a first torque detection part 20A(3) provided with a first bridge circuit 21A(3) constituted of three sets of strain gauges 11(A1, A2) to 11(C1, C2), and a second torque detection part 20B(3) provided with a second bridge circuit 21B(3) constituted of the remaining three sets of strain gauges 11(D1, D2) to 11(F1, F2). Torque is detected on the basis of detection outputs from each of the three sets of strain gauges 11 constituting the first bridge circuit 21A(3), and detection outputs from each of the three sets of strain gauges 11 constituting the second bridge circuit 21B(3).

In this case, detection outputs (OUT1-3) from each of the three sets of strain gauges 11 constituting the first bridge circuit 21A(3) are combined after being amplified via an amplification part for gain adjustment (not shown), and a first detection signal is generated. Similarly, detection outputs (OUT4-6) from each of the three sets of strain gauges 11 constituting the second bridge circuit 21B(3) are combined after being amplified via an amplification part for gain adjustment (not shown), and a second detection signal is generated. The first detection signal and the second detection signal are combined and a combined signal is generated. Transmitted torque is calculated on the basis of the first detection signal, the second detection signal, and the combined signal.

FIG. 9 shows another example of using two systems for the torque detection part 20(3) in the case of a 60° arrangement of strain gauges in six places (see FIG. 7). In the example of FIG. 9, the torque detection part is divided into a first torque detection part 20A(4) provided with a first bridge circuit (not shown) constituted of three sets of strain gauges 11(A1, A2), 11(C1, C2), and 11(E1, E2), and a second torque detection part 20B(4) provided with a second bridge circuit (not shown) constituted of the remaining three sets of strain gauges 11(B1, B2), 11(D1, D2), and 11(F1, F2). The outputs of three systems are obtained in this case as well, as in the example of FIG. 8. The transmitted torque can be calculated based on the outputs of three systems, respectively.

### (Yet another example of torque detection part)

FIG.10(A) shows yet another example of the torque detection part 20 that is provided with a first torque detection part and a second torque detection part, these torque detection parts being of two independent systems. The torque detection part 20A(5) as shown in this figure is provided with six sets of strain gauges 11(A1, A2) through 11(F1, F2) attached to the diaphragm of an externally toothed gear. As shown in FIG. 10(B), three sets of strain gauges 11(A1, A2), 11(C1, C2), and 11(E1, E2), which constitute the first toque detection part 20A(5), are arranged at 120° intervals around the central axis of the diaphragm. As shown in FIG. 10(C), the remaining three sets of strain gauges 11(B1, B2), 11(D1, D2) and 11(F1, F2), which constitute the second torque detection part 20B(5), are arranged at 120° intervals around the central axis of the diaphragm. In addition, these three sets of strain gauges 11(B1, B2), 11(D1, D2) and 11(F1, F2) are respectively located at angular positions rotated by 30° from the positions of the three sets of strain gauges 11(A1, A2), 11(C1, C2) and 11(E1, E2) arranged at 120° intervals.

In this case, a first detection signal 22A, which is an output of a first bridge circuit constituted by the three sets of strain gauges 11(A1, A2), 11(C1, C2) and 11(E1, E2), is amplified through a not-shown amplifier for gain adjustment, so that a first detection signal 23A is generated. Similarly, a second detection signal 22B, which is an output of a second bridge circuit constituted by the three sets of strain gauges 11(B1, B2), 11(D1, D2) and 11(F1, F2), is amplified through a not-shown amplifier for gain adjustment, so that a second detection signal 23B is generated. These detection signals of two independent systems are combined to generate a combined signal 23C. A combined signal, which is obtained by adding the first and second torque detection signals having a phase difference of 30° with each other, is a high-accurate detection signal from which sixth component of rotational ripple is removed and of which linearity is improved.

A graph shown in Fig. 11(A) is a measured value showing the ratio of error components contained in the first torque detection signal obtained from the first torque detection unit shown in Fig. 10(B) (when three sets of strain gauges 11 are arranged at equal angles of 120°). Fig. 11(B) is a graph showing the simulation results of torque detection by the torque detection unit 20(5) shown in Fig. 10. In these graphs, the horizontal axis shows the input rotation angle (deg) of the wave generator, and the vertical axis shows the ratio (%) of error components contained in the torque detection signal.

In the graph shown in FIG. 11(B), broken line La (measured value) is the error component ratio (measured value) contained in the first torque detection signal obtained from the first torque detection unit shown in FIG. 11(A). Broken line Lb shows the error component ratio contained in the second torque detection signal obtained from the second torque detection unit. This broken line Lb is obtained by shifting the broken line La showing the measured values by 30° in phase. Broken line Lc (addition of two signals) shows the error component ratio contained in the combined signal obtained by combining the first torque detection signal and the second torque detection signal. As can be seen from the graph, the sixth-order periodic error component contained in the torque detection signal is significantly reduced.

Here, if the first and second torque detection units are constituted of six sets of strain gauges 11 shown in Figs 7 and 8 described above, it is possible to compensate for up to two frequency components contained in the rotation ripple by adjusting the gain of each of the six channel (6CH) signals (OUT1 to OUT6) of these torque detection units, but the outputs of the 6CH must be processed individually.

In contrast, in this example, the first torque detection unit is constituted of three sets of strain gauges 11 arranged at angular intervals of 120°, and the second torque detection unit is constituted of three sets of strain gauges 11 arranged at a position rotated 30° relative to the three sets of strain gauges 11 of the first torque detection unit. Simply adding the 2CH outputs obtained from the first and second torque detection units removes the sixth-order component of the rotation ripple and provides a highly accurate detection output (combined signal) with improved linearity.

### (Other embodiments)

In the examples described above, the strain gauges are attached to the diaphragm of a top-hat-shaped externally toothed gear serving as the externally toothed gear. The positions where the strain gauges are attached may be portions on the surface of the cylindrical barrel part of the externally toothed gear, other than the portion where the external teeth are formed. In addition, the present invention can be similarly applied to a strain wave gearing provided with a cup-shaped externally toothed gear, as well as a strain wave gearing provided with a cylindrical externally toothed gear.

In the above example, an orthogonal two-axis type strain gauge having a two-axis overlapping arrangement is used. As an orthogonal two-axis type strain gauge, a two-axis planar arrangement type is also known, and it is of course possible to use this type of orthogonal two-axis type strain gauge.

## Claims

1. A strain wave gearing with a torque detection device that detects transmitted torque transmitted via a flexible externally toothed gear, wherein
the torque detection device comprises
a first torque detection part and a second torque detection part that output detection signals of two independent systems,
an output-combining part that combines a first detection signal, which is the detection signal from the first torque detection part, and a second detection signal, which is the detection signal from the second torque detection part, and generates a combined signal, and
an output part that outputs either the first detection signal, the second detection signal, and the combined signal, or a first detected torque signal, a second detected torque signal, and a combined torque signal representing the transmitted torque calculated based on the first and second detection signals and the combined signal; and
wherein
the first torque detection part is provided with a first group of strain gauges attached at predetermined angular intervals to a surface of the externally toothed gear around a central axis of the externally toothed gear; and
the second torque detection part is provided with a second group of strain gauges attached at predetermined angular intervals to the surface of the externally toothed gear around the central axis of the externally toothed gear.

2. The strain wave gearing according to claim 1, wherein:
the externally toothed gear has a cup shape or a top hat shape comprising a cylindrical barrel part on which external teeth are formed and a diaphragm extending in a radial direction from one end of the cylindrical barrel part,
the cylindrical barrel part of the externally toothed gear is caused to flex into an ellipsoidal shape by a wave generator and the external teeth located on a major axis of the ellipsoidal shape mesh with a rigid internally toothed gear, and
the first group of strain gauges and the second group of strain gauges are attached to a surface of the diaphragm of the externally toothed gear.

3. The strain wave gearing according to claim 2, wherein:
eight sets of first to eighth strain gauges disposed at equal angular intervals of 45° are provided around the central axis;
the first to eighth strain gauges are disposed clockwise in order from first to eighth;
the first torque detection part includes the first, third, fifth, and seventh strain gauges as the first group of strain gauges, and output of a first Wheatstone bridge circuit constituted of the first, third, fifth, and seventh strain gauges is amplified and outputted as the first detection signal; and
the second torque detection part includes the second, fourth, sixth, and eighth strain gauges as the second group of strain gauges, and output of a second Wheatstone bridge circuit constituted of the second, fourth, sixth, and eighth strain gauges is amplified and outputted as the second detection signal.

4. The strain wave gearing according to claim 2, wherein:
eight sets of first to eighth strain gauges disposed at equal angular intervals of 45° are provided around the central axis;
the first to eighth strain gauges are disposed clockwise in order from first to eighth;
the first torque detection part includes the first to fourth strain gauges as the first group of strain gauges, and output of a first Wheatstone bridge circuit constituted of the first to fourth strain gauges is amplified and outputted as the first detection signal; and
the second torque detection part includes the fifth to eighth strain gauges as the second group of strain gauges, and output of a second Wheatstone bridge circuit constituted of the fifth to eighth strain gauges is amplified and outputted as the second detection signal.

5. The strain wave gearing according to claim 2, wherein:
eight sets of first to eighth strain gauges disposed at equal angular intervals of 45° are provided around the central axis;
the first to eighth strain gauges are disposed clockwise in order from first to eighth;
the first torque detection part includes the first, third, sixth, and eighth strain gauges as the first group of strain gauges, and output of a first Wheatstone bridge circuit constituted of the first, third, sixth, and eighth strain gauges is amplified and outputted as the first detection signal; and
the second torque detection part includes the second, fourth, fifth, and seventh strain gauges as the second group of strain gauges, and output of a second Wheatstone bridge circuit constituted of the second, fourth, fifth, and seventh strain gauges is amplified and outputted as the second detection signal.

6. The strain wave gearing according to claim 2, wherein:
six sets of first to sixth strain gauges disposed at equal angular intervals of 60° are provided around the central axis;
the first to sixth strain gauges are disposed clockwise in order from first to sixth;
the first torque detection part includes the first to third strain gauges as the first group of strain gauges, and outputs from the first to third strain gauges are combined after being amplified and are outputted as the first detection signal; and
the second torque detection part includes the fourth to sixth strain gauges as the second group of strain gauges, and outputs from the fourth to sixth strain gauges are combined after being amplified and are outputted as the second detection signal.

7. The strain wave gearing according to claim 2, wherein:
six sets of first to sixth strain gauges disposed at equal angular intervals of 60° are provided around the central axis;
the first to sixth strain gauges are disposed clockwise in order from first to sixth;
the first torque detection part includes the first, third, and fifth strain gauges as the first group of strain gauges, and outputs from the first, third, and fifth strain gauges are combined after each being amplified and are outputted as the first detection signal; and
the second torque detection part includes the second, fourth, and sixth strain gauges as the second group of strain gauges, and outputs from the second, fourth, and sixth strain gauges are combined after each being amplified and are outputted as the second detection signal.

8. The strain wave gearing according to claim 2, wherein:
six sets of first to sixth strain gauges disposed at prescribed angular intervals are provided around the central axis;
the first to sixth strain gauges are disposed clockwise in order from first to sixth;
the first torque detection part includes the first, third, and fifth strain gauges as the first group of strain gauges, and outputs from the first, third, and fifth strain gauges are combined and are outputted as the first detection signal;
the second torque detection part includes the second, fourth, and sixth strain gauges as the second group of strain gauges, and outputs from the second, fourth, and sixth strain gauges are combined and are outputted as the second detection signal; and
the second, fourth, and sixth strain gauges as the second group of strain gauges are respectively arranged at positions rotated by 30° in a clockwise direction relative to the first, third, and fifth strain gauges as the first group of strain gauges.
